# FASCICULE DE BREVET EUROPEEN

(11) **EP 4 014 482 B1**
(45) Date de publication et mention de la délivrance du brevet: **28.06.2023**
(21) Numéro de dépôt: 20726868.1
(22) Date de dépôt: 26.05.2020
(51) Int. Cl.: H04N 7/18, G06K 9/00, H04N 5/225, H04N 5/232, H04N 21/442

(54) **CAMERA RESEAU MUNIE D'UN CAPOT DE PRIVATISATION**
NETZWERKKAMERA MIT EINER PRIVATSPHÄRENABDECKUNG
NETWORK CAMERA PROVIDED WITH A PRIVACY COVER

(30) Priorité: 12.08.2019 FR 1909165
(43) Date de publication de la demande: 22.06.2022
(73) Titulaire: SAGEMCOM BROADBAND SAS, 92500 Rueil-Malmaison (FR)
(72) Inventeur: SABATIER, Pierre, 92500 Rueil Malmaison (FR); ALEGRE, Thierry, 92500 Rueil Malmaison (FR)
(74) Mandataire: Lavaud, Thomas
(86) Numéro de dépôt international: PCT/EP2020/064520
(87) Numéro de publication internationale: WO 2021/028086

(56) Documents cités:
- US-A1- 2015 288 877
- US-A1- 2016 105 598
- US-A1- 2017 006 226
- US-A1- 2018 120 661
- US-A1- 2019 199 898

## Description

L'invention concerne le domaine des caméras réseau munies d'un capot destiné à préserver la vie privée des utilisateurs.

### ARRIERE PLAN DE L'INVENTION

On assiste aujourd'hui à un développement spectaculaire des caméras réseau (aussi appelées « caméra IP ») disponibles à la vente, aussi bien pour les professionnels que pour les particuliers.

Les caméras réseau sont des systèmes informatiques à part entière, qui transmettent des flux vidéo compressés sur des réseaux de communication utilisant le Protocole Internet via des liaisons de type Wi-Fi ou Ethernet. Les flux vidéo sont alors possiblement enregistrés sur le *Cloud* ou bien accessibles en direct sur un équipement mobile, tel qu'un *smartphone,* depuis une interface *web* ou une application.

Ces caméras réseau sont utilisées par exemple dans des applications de vidéosurveillance, professionnelles ou domestiques, en extérieur ou en intérieur. Ces caméras réseau sont aussi utilisées par exemple dans des applications de visiophonie.

Parmi ces caméras réseau, on connaît une première caméra réseau de l'art antérieur qui est munie d'un capot de privatisation pour préserver la vie privée des utilisateurs.

Lorsque les occupants d'une maison se trouvent dans la maison, le capot se trouve dans une position fermée, dans laquelle il cache le capteur d'image de la première caméra réseau. Le capot passe dans une position ouverte lorsque la maison est vide. Le capot peut passer d'une position à l'autre de manière automatique et programmée, ou bien en étant actionné manuellement ou à distance par un utilisateur.

On connaît aussi une deuxième caméra réseau de l'art antérieur qui, pour préserver la vie privée des utilisateurs, comprend un écran teinté positionné en permanence devant le capteur d'image. La deuxième caméra réseau produit un flux vidéo représentatif non pas de la scène, mais de différences évaluées en temps réel entre la scène et un environnement fixe.

La deuxième caméra réseau ne filme pas la scène de manière classique, en RGB (pour Red, *Green, Blue*)*,* mais utilise un capteur d'image de type DVS (pour *Dynamic Vision Sensor*). Cette deuxième caméra réseau produit des images « fonctionnelles », utilisables pour la vidéosurveillance mais suffisamment dégradées pour ne pas risquer de compromettre la vie privée des utilisateurs.

On exécute sur les images dégradées des algorithmes d'apprentissage profond (ou *Deep Learning,* en anglais) pour mettre en oeuvre des reconnaissances de formes. Ces algorithmes correspondent aux algorithmes de reconnaissance optique mis en oeuvre en imagerie RGB, mais le niveau de reconnaissance est nettement moins élevé.

Les deux caméras réseau de l'art antérieur qui viennent d'être décrites sont limitées fonctionnellement.

Dans le cas de la première caméra réseau, lorsque le capot se trouve dans la position fermée, la vie privée des utilisateurs est bien protégée mais aucune information ne peut être acquise et aucune analyse de la scène ne peut être réalisée.

Dans le cas de la deuxième caméra réseau, des analyses peuvent être réalisées en permanence, mais une image précise et de qualité de la scène n'est jamais disponible, ce qui empêche notamment de mettre en oeuvre une fonction de visiophonie.

US 2019/199898 A1 divulgue la création de métadonnées associées aux événements dans l'image capturée.

US 2016/105598 A1 se réfère aux systèmes mobiles pour bloquer l'image à capturer.

### OBJET DE L'INVENTION

L'invention a pour objet une caméra réseau capable, d'une part, de produire un flux vidéo de qualité, et d'autre part, de fournir en permanence des informations en temps réel sur une scène en face de la caméra réseau, tout en préservant efficacement la vie privée des utilisateurs.

### RESUME DE L'INVENTION

En vue de la réalisation de ce but, on propose une caméra réseau comportant :
- un capteur d'image ;
- un capot au moins partiellement opaque au spectre visible, le capot étant mobile entre une position fermée dans laquelle il s'étend devant et cache le capteur d'image, et une position ouverte ;
- un module de traitement ayant au moins une entrée, une première sortie et une deuxième sortie, et étant agencé pour recevoir via l'entrée des images acquises par le capteur d'image, pour réaliser sur les images acquises un premier traitement de manière à générer un flux vidéo et un deuxième traitement de manière à générer des données d'information relatives aux images acquises, et pour transmettre le flux vidéo via la première sortie et les données d'information via la deuxième sortie ;
- un dispositif de détection agencé pour détecter si le capot se trouve dans la position ouverte ou dans la position fermée ;
- un dispositif interrupteur relié à la première sortie du module de traitement ;
   la caméra réseau étant agencée de sorte que, lorsque le dispositif de détection détecte que le capot se trouve dans la position fermée, le dispositif interrupteur est commandé pour interdire toute transmission à un réseau de communication par le module de traitement via la première sortie.

Ainsi, lorsque le capot se trouve dans la position ouverte, le module de traitement peut produire un flux vidéo de qualité à partir des images acquises, qui sont parfaitement nettes, et transmettre le flux vidéo à un réseau de communication auquel la caméra réseau est connectée. Ce flux vidéo peut par exemple être utilisé pour mettre en oeuvre une fonction de visiophonie performante.

Par contre, lorsque le capot se trouve dans la position fermée, le module de traitement ne peut pas transmettre de flux vidéo vers le réseau de communication, car le dispositif interrupteur interdit cette transmission. La vie privée des utilisateurs de la caméra réseau est donc préservée. Le module de traitement peut cependant analyser en local la scène vue à travers le capot au moins partiellement opaque, et transmettre des données d'information qui sont des données abstraites et anonymes, dont la transmission ne compromet pas la vie privée des utilisateurs.

La vie privée d'un utilisateur est d'autant plus préservée qu'il est impossible de commander l'émission d'un flux vidéo depuis l'extérieur de la caméra réseau à son insu, et notamment depuis le réseau de communication. En effet, pour que le dispositif interrupteur autorise la transmission du flux vidéo, le capot doit se trouver physiquement dans la position ouverte.

Optionnellement, une sortie du dispositif de détection est directement reliée à une entrée de commande du dispositif interrupteur, le dispositif de détection pilotant ainsi le dispositif interrupteur en fonction de la détection de la position ouverte ou de la position fermée du capot. Optionnellement, le dispositif interrupteur comprend un *buffer* vidéo.

Optionnellement, le dispositif de détection comprend une fourche optique agencée pour détecter entre ses bras la présence ou l'absence du capot ou d'une pièce intermédiaire reliée au capot.

Optionnellement, la caméra comprend une première voie de transmission et une deuxième voie de transmission reliées respectivement à la première sortie et à la deuxième sortie du module de traitement, la première voie de transmission présentant un premier débit suffisant pour transmettre le flux vidéo, et la deuxième voie de transmission présentant un deuxième débit insuffisant pour transmettre le flux vidéo.

Optionnellement, le module de traitement intègre un logiciel comprenant des routines pour mettre en oeuvre un protocole de communication utilisé sur la deuxième voie de transmission.

Optionnellement, le module de traitement comporte un processeur d'image relié directement au capteur d'image, un microprocesseur et une puce de traitement neuronal utilisée pour mettre en oeuvre le deuxième traitement. Optionnellement, le capot est opaque au spectre visible mais transparent au spectre infrarouge.

Optionnellement, la caméra réseau comporte au moins une diode électroluminescente infrarouge agencée pour émettre une lumière infrarouge pour éclairer une scène en regard de la caméra réseau lorsque le capot se trouve dans la position fermée et que la scène est trop sombre.

Optionnellement, le capot comprend un film opaque au spectre visible mais transparent au spectre infrarouge. Optionnellement, le capot présente une coloration, réalisée en teinté masse, opaque au spectre visible mais transparente au spectre infrarouge.

Optionnellement, le capot est motorisé pour se déplacer entre la position ouverte et la position fermée. Optionnellement, les données d'information sont représentatives d'un nombre d'individu(s) présent(s) et/ou de l'âge des individus et/ou de leur genre et/ou de l'émotion exprimée et/ou de leur attention et/ou de la position de leur regard et/ou de la position de leur corps et/ou de la direction de leur regard.

Optionnellement, on propose également un procédé de traitement mis en oeuvre dans une caméra réseau telle que précitée, comprenant les étapes de :
- lorsque le capot se trouve dans la position ouverte, acquérir les images acquises par le capteur d'image, réaliser sur les images acquises le premier traitement de manière à générer le flux vidéo, et transmettre à un réseau de communication le flux vidéo via la première sortie du module de traitement ;
- lorsque le capot se trouve dans la position fermée, acquérir les images acquises produites par le capteur d'image, réaliser sur les images acquises le deuxième traitement de manière à générer des données d'information, et transmettre au réseau de communication les données d'information via la deuxième sortie du module de traitement.

Optionnellement, on propose également un programme d'ordinateur comprenant des instructions pour mettre en oeuvre, par un microprocesseur d'une caméra réseau, le procédé de traitement précité.

Optionnellement, on propose également des moyens de stockage stockant un programme d'ordinateur comprenant des instructions pour mettre en oeuvre, par un microprocesseur d'une caméra réseau, le procédé de traitement selon la revendication précité.

L'invention sera mieux comprise à la lumière de la description qui suit d'un mode de mise en oeuvre particulier non limitatif de l'invention.

### BREVE DESCRIPTION DES DESSINS

Il sera fait référence aux dessins annexés, parmi lesquels :
[Fig. 1] la figure 1 est une vue en perspective d'une caméra réseau selon l'invention, le capot de la caméra réseau étant dans une position ouverte ;
[Fig. 2] la figure 2 est une vue similaire à celle de la figure 1, le capot de la caméra étant dans une position fermée ;
[Fig. 3] la figure 3 est un schéma de la caméra réseau selon l'invention.

### DESCRIPTION DETAILLEE DE L'INVENTION

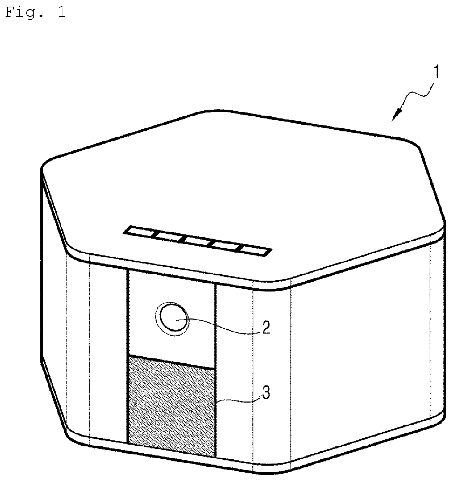

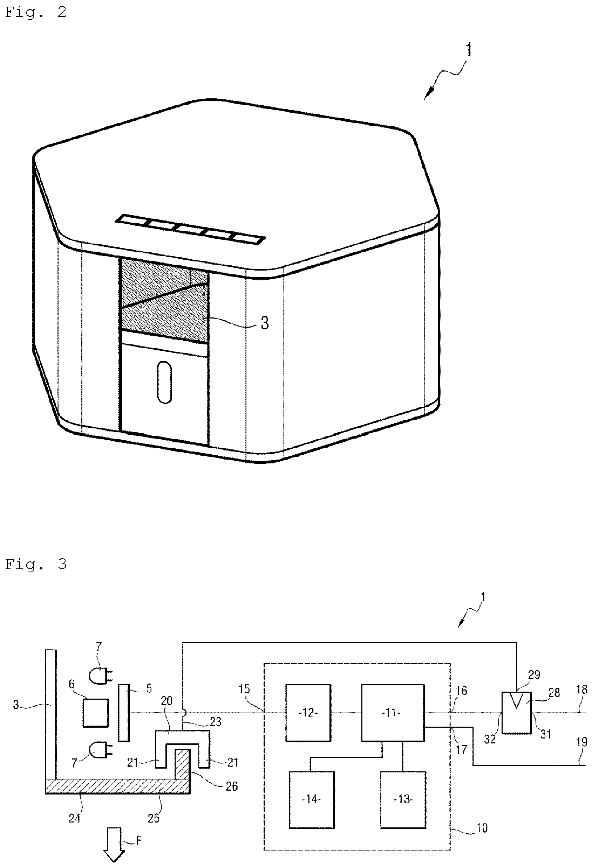

En référence aux figures 1 et 2, la caméra réseau selon l'invention 1 est ici destinée à mettre en oeuvre une application de visiophonie.

La caméra réseau 1 comporte tout d'abord un dispositif d'acquisition d'image 2, comportant un dispositif optique comprenant par exemple une ou plusieurs lentilles, et un capteur d'image situé derrière le dispositif optique (c'est-à-dire du côté de l'intérieur et non de l'extérieur de la caméra réseau 1).

La caméra réseau 1 comprend aussi un capot 3 qui est au moins partiellement opaque au spectre visible. Ici, le capot 3 est opaque au spectre visible mais transparent à un spectre non visible particulier, qui est en l'occurrence le spectre infrarouge. Ainsi, le capot 3 laisse passer la lumière infrarouge mais bloque la lumière visible.

Le capot 3 comprend à cet effet un mince film intégré dans l'épaisseur du capot 3, le film étant opaque au spectre visible et transparent au spectre infrarouge.

Le capot 3 est mobile entre une position ouverte (et basse), visible sur la figure 1, dans laquelle le champ de vision du capteur d'image est laissé libre et dans laquelle la caméra réseau 1 peut mettre en oeuvre une fonction de visiophonie grand angle, et une position fermée (et haute), visible sur la figure 2, dans laquelle le capot 3 s'étend devant et cache le dispositif d'acquisition d'image 2 et donc le capteur d'image.

Le capot 3 est motorisé pour se déplacer entre la position ouverte et la position fermée. Le capot 3 peut être commandé à distance, par exemple via un *smartphone,* ou bien automatiquement.

En référence à la figure 3, on voit que, outre le capteur d'image 5 et le dispositif optique 6, le dispositif d'acquisition d'image 2 de la caméra réseau 1 comprend au moins une, en l'occurrence deux sources lumineuses agencées pour émettre une lumière dans le spectre non visible particulier, c'est-à-dire dans le spectre infrarouge.

Chaque source lumineuse est ici une LED IR 7, c'est-à-dire une diode électroluminescente infrarouge. Les deux LEDs IR 7 sont positionnées de part et d'autre du dispositif optique 6.

La caméra réseau 1 comporte de plus un module de traitement 10 comprenant un microprocesseur 11, un processeur d'image 12 (ou ISP, pour *Image Signal Processor*)*,* une puce de traitement neuronal 13 (ou NPU, pour *Neural Processing Unit*)*,* c'est-à-dire une puce dédiée à la mise en oeuvre d'algorithmes d'intelligence artificielle et de réseaux de neurones. Le module de traitement 10 comporte aussi une mémoire 14 reliée au microprocesseur 11.

Le module de traitement 10 comprend une entrée 15 qui est directement reliée au capteur d'image 5, ainsi qu'une première sortie 16 et une deuxième sortie 17. L'entrée 15 du module de traitement 10 est une entrée du processeur d'image 12. La première sortie 16 et la deuxième sortie 17 sont des sorties du microprocesseur 11.

La caméra réseau 1 comprend une première voie de transmission 18 et une deuxième voie de transmission 19, qui sont reliées respectivement à la première sortie 16 et à la deuxième sortie 17 du module de traitement 10.

La première voie de transmission 18 présente un premier débit élevé permettant de transmettre un flux vidéo.

La deuxième voie de transmission 19 présente un deuxième débit faible, insuffisant pour transmettre un flux vidéo.

Pour mettre en oeuvre la deuxième voie de transmission 19, un logiciel est programmé dans le microprocesseur 11. Le logiciel comprend des routines pour exécuter un protocole de communication utilisé sur la deuxième voie de transmission 19. Le protocole de communication est un protocole SPI qui est émulé par un port. On n'utilise donc pas de bloc électronique particulier dédié à la mise en oeuvre du protocole de communication.

On assure de la sorte que les communications sur la deuxième voie de transmission 19 ne peuvent être réalisées avec un débit supérieur au deuxième débit. Le deuxième débit est ici égal à quelques kb/s.

La caméra réseau 1 comprend de plus un dispositif de détection agencé pour détecter une position effective du capot 3.

Le dispositif de détection comporte ici une fourche optique 20. La fourche optique 20 comprend deux bras 21, un émetteur optique positionné sur l'un des bras 21 et un récepteur optique positionné sur l'autre des bras 21. L'émetteur optique produit un faisceau lumineux qui est reçu par le récepteur optique lorsque l'espace est libre entre les deux bras 21, et qui n'est pas reçu par le récepteur optique lorsqu'un corps (opaque au spectre du faisceau lumineux de la fourche optique 20) est positionné entre les deux bras 21.

La fourche optique 20 produit ici sur sa sortie 23 un niveau de tension bas lorsqu'un corps est positionné entre les deux bras 21, et un niveau de tension haut lorsqu'aucun corps n'est positionné entre les deux bras 21.

Le dispositif de détection comprend aussi une pièce intermédiaire 24 liée au capot 3. La pièce intermédiaire 24 est opaque au spectre du faisceau lumineux de la fourche optique 20.

La pièce intermédiaire 24 présente une portion courante 25 et une portion extrémale 26.

La portion courante 25 est de forme longitudinale et s'étend perpendiculairement au capot 3 depuis une portion inférieure du capot 3. La portion courante 25 présente une première extrémité liée au capot 3, et une deuxième extrémité.

La portion extrémale 26 s'étend depuis la deuxième extrémité de la portion courante 25, perpendiculairement à celle-ci, vers le haut.

La pièce intermédiaire 24 présente donc une section en forme de L selon un plan perpendiculaire au capot 3.

La fourche optique 20 coopère avec la portion extrémale 26 de la pièce intermédiaire 24.

Lorsque le capot 3 se trouve en position haute, comme c'est le cas sur la figure 3, c'est-à-dire dans la position fermée, la portion extrémale 26 est positionnée entre les deux bras 21 de la fourche optique 20. La fourche optique 20 détecte la présence de la portion extrémale 26 et donc produit un niveau de tension bas.

Au contraire, suite à son déplacement dans le sens de la flèche F, lorsque le capot 3 se trouve en position basse, la portion extrémale 26 est éloignée de la fourche optique 20. La fourche optique 20 ne détecte donc plus la présence de la portion extrémale 26 et produit un niveau de tension haut.

La caméra réseau 1 comprend aussi un dispositif interrupteur. Le dispositif interrupteur est monté sur la première voie de transmission 18 et est donc relié à la première sortie 16 du module de traitement 10.

Le dispositif interrupteur comporte ici un *buffer* vidéo 28 ayant une entrée de commande 29.

Lorsque le *buffer* vidéo 28 reçoit sur son entrée de commande 29 un niveau de tension bas, ce qui signifie que le capot 3 est fermé, le *buffer* vidéo 28 bloque la transmission et joue donc le rôle d'un interrupteur dans un état bloqué.

Lorsque le *buffer* vidéo 28 reçoit sur son entrée de commande 29 un niveau de tension haut, ce qui signifie que le capot 3 est ouvert, le *buffer* vidéo 28 transmet sur sa sortie 31 les données reçues sur son entrée 32 et joue donc le rôle d'un interrupteur dans un état passant.

On décrit maintenant le fonctionnement particulier de la caméra réseau 1 lorsque le capot 3 se trouve dans la position ouverte puis lorsque le capot 3 se trouve dans la position fermée.

Lorsque le capot 3 se trouve dans la position ouverte, le capteur d'image 5 acquiert via le dispositif optique 6 des images acquises parfaitement nettes et représentatives précisément de la scène qui se trouve dans le champ de vision du capteur d'image 5.

Le module de traitement 10 met en oeuvre un premier traitement sur les images acquises pour générer un flux vidéo.

Le processeur d'image 12 réalise sur les images acquises un traitement numérique préliminaire, comprenant par exemple une réduction de bruit, un dématriçage, un adoucissement, etc.

Puis, le microprocesseur 11 acquiert les images acquises en sortie du processeur d'image 12, réalise éventuellement des traitements numériques additionnels, et met en forme le flux vidéo.

La fourche optique 20 détecte l'absence de la portion extrémale 26 de la pièce intermédiaire 24 entre les bras 21, et donc détecte que le capot 3 se trouve en position ouverte. La fourche optique 20 produit un niveau de tension haut. Le *buffer* vidéo 28 reçoit sur son entrée de commande 29 le niveau de tension haut. Le *buffer* vidéo 28 transmet sur sa sortie 31 les données reçues sur son entrée 32 et autorise les transmissions réalisées par le microprocesseur 11 sur la première voie de transmission 18 via la première sortie 16 du module de traitement 10. La caméra réseau 1 peut donc transmettre le flux vidéo à un réseau de communication auquel elle est connectée.

Lorsque le capot 3 se trouve dans la position fermée, le capteur d'image 5 acquiert des images dégradées du fait de l'opacité du capot 3 au spectre visible.

Le module de traitement 10 met en oeuvre un deuxième traitement sur les images acquises.

Le processeur d'image 12 réalise sur les images acquises au travers du capot 3 un traitement numérique préliminaire.

Puis, le microprocesseur 11 reçoit les images acquises en sortie du processeur d'image 12 et les transmet à la puce de traitement neuronal 13.

La puce de traitement neuronal 13 met en oeuvre une analyse de la scène en utilisant des algorithmes d'intelligence artificielle et de réseaux de neurones. Le microprocesseur 11 et la puce de traitement neuronal 13 extraient de la scène des données d'information « abstraites » relatives aux images acquises. Les données d'information sont représentatives de toutes ou certaines de ces informations : nombre d'individu(s) présent(s) dans la scène, âge des individus, genre, émotion exprimée, attention, position de leur regard, position de leur corps, direction de leur regard, etc.

La fourche optique 20 détecte la présence de la portion extrémale 26 de la pièce intermédiaire 24 entre les bras 21, et donc que le capot 3 se trouve en position fermée. La fourche optique 20 produit un niveau de tension bas. Le *buffer* vidéo 28 reçoit sur son entrée de commande 29 le niveau de tension bas, et interdit toute transmission au réseau de communication par le module de traitement 10 via sa première sortie 16.

La caméra réseau 1 ne peut donc plus transmettre de flux vidéo, car la première voie de transmission 18 est coupée et la deuxième voie de transmission 19 ne le permet pas du fait de son faible débit.

La caméra réseau 1 transmet donc uniquement au réseau de communication les données d'information à bas débit, sur la deuxième voie de transmission 19.

On note que, si la scène est trop sombre, les deux LED IR 7 peuvent être utilisées pour l'éclairer en lumière infrarouge et ainsi améliorer la qualité des images acquises au travers du capot 3 et donc la précision des données d'information.

La caméra réseau selon l'invention 1 est particulièrement avantageuse.

Lorsque le capot 3 est ouvert, elle peut produire un flux vidéo de qualité et permettre de mettre en oeuvre une fonction de visiophonie performante.

Lorsque le capot 3 est fermé, soit parce qu'un utilisateur l'a actionné manuellement ou à distance, soit parce qu'un programme l'a fermé automatiquement, des analyses de la scène peuvent être réalisées en local et les données d'information abstraites peuvent être transmises sur le réseau de communication. Cependant, ces données d'information sont anonymes, non personnalisées, et leur transmission ne constitue pas une atteinte à la vie privée des utilisateurs.

L'architecture de la caméra réseau 1 empêche toute transmission de flux vidéo lorsque le capot 3 est fermé. Le blocage de flux est physique, et résulte du fait que la première voie de transmission 18 est bloquée par le dispositif interrupteur et du fait que la deuxième voie de transmission 19 ne peut pas transmettre de flux vidéo.

Ainsi, la vie privée des utilisateurs ne peut être violée à distance. Il est en effet impossible d'agir à distance sur le dispositif interrupteur, puisque le dispositif interrupteur n'est pas télécommandable. Le déblocage de la première voie de transmission 18 nécessite nécessairement de déplacer physiquement, mécaniquement, le capot 3.

Bien entendu, l'invention n'est pas limitée au mode de réalisation décrit mais englobe toute variante entrant dans le champ de l'invention telle que définie par les revendications.

On a indiqué que la caméra réseau est utilisée dans une application de visiophonie. Elle pourrait bien sûr être utilisée dans une application différente, de vidéosurveillance par exemple.

On a décrit que le capot comprend un film opaque au spectre visible mais transparent au spectre infrarouge. Cette caractéristique du capot pourrait être obtenue de manière différente. Le capot pourrait présenter une coloration, réalisée en teinté masse, opaque au spectre visible mais transparente au spectre infrarouge.

On note que le capot pourrait être transparent à un autre spectre, par exemple au spectre ultraviolet.

Le capot pourrait aussi être simplement partiellement opaque au spectre visible, grâce à un film ou une coloration.

La caméra réseau pourrait parfaitement être intégrée dans un équipement multifonctions, par exemple dans une enceinte connectée, un boîtier décodeur, une passerelle résidentielle, etc.

On note qu'il serait possible de prévoir que la caméra réseau fonctionne non pas selon deux modes mais selon trois modes : un premier mode, capot ouvert, dans lequel un flux vidéo peut être transmis, un deuxième mode, capot fermé, dans lequel seules des données d'information peuvent être transmises, et un troisième mode, capot fermé, dans lequel aucune transmission n'est possible.

## Revendications

1. Caméra réseau comportant :
- un capteur d'image (5) ;
- un capot (3) au moins partiellement opaque au spectre visible, le capot (3) étant mobile entre une position fermée dans laquelle il s'étend devant et cache le capteur d'image (5), et une position ouverte ;
- un module de traitement (10) ayant au moins une entrée (15), une première sortie (16) et une deuxième sortie (17), et étant agencé pour recevoir via l'entrée (15) des images acquises par le capteur d'image (5), pour réaliser sur les images acquises un premier traitement de manière à générer un flux vidéo et un deuxième traitement de manière à générer des données d'information relatives aux images acquises, et pour transmettre le flux vidéo via la première sortie (16) et les données d'information via la deuxième sortie (17) ;
- un dispositif de détection agencé pour détecter si le capot (3) se trouve dans la position ouverte ou dans la position fermée ;
- un dispositif interrupteur relié à la première sortie (16) du module de traitement (10) ;
la caméra réseau (1) étant agencée de sorte que, lorsque le dispositif de détection détecte que le capot (3) se trouve dans la position fermée, le dispositif interrupteur est commandé pour interdire toute transmission à un réseau de communication par le module de traitement (10) via la première sortie (16).

2. Caméra réseau selon la revendication 1, dans laquelle une sortie (23) du dispositif de détection est directement reliée à une entrée de commande (29) du dispositif interrupteur, le dispositif de détection pilotant ainsi le dispositif interrupteur en fonction de la détection de la position ouverte ou de la position fermée du capot (3).

3. Caméra réseau selon la revendication 2, dans laquelle le dispositif interrupteur comprend un *buffer* vidéo (28).

4. Caméra réseau selon l'une des revendications précédentes, dans laquelle le dispositif de détection comprend une fourche optique (20) agencée pour détecter entre ses bras (21) la présence ou l'absence du capot (3) ou d'une pièce intermédiaire (24) reliée au capot.

5. Caméra réseau selon l'une des revendications précédentes comprenant une première voie de transmission (18) et une deuxième voie de transmission (19) reliées respectivement à la première sortie (16) et à la deuxième sortie (17) du module de traitement (10), la première voie de transmission présentant un premier débit suffisant pour transmettre le flux vidéo, et la deuxième voie de transmission présentant un deuxième débit insuffisant pour transmettre le flux vidéo.

6. Caméra réseau selon la revendication 5, dans laquelle le module de traitement intègre un logiciel comprenant des routines pour mettre en oeuvre un protocole de communication utilisé sur la deuxième voie de transmission (19).

7. Caméra réseau selon l'une des revendications précédentes, dans laquelle le module de traitement (10) comporte un processeur d'image (12) relié directement au capteur d'image (5), un microprocesseur (11) et une puce de traitement neuronal (13) utilisée pour mettre en oeuvre le deuxième traitement.

8. Caméra réseau selon l'une des revendications précédentes, dans laquelle le capot est opaque au spectre visible mais transparent au spectre infrarouge.

9. Caméra réseau selon la revendication 8, comprenant en outre au moins une diode électroluminescente infrarouge (7) agencée pour émettre une lumière infrarouge pour éclairer une scène en regard de la caméra réseau (1) lorsque le capot (3) se trouve dans la position fermée et que la scène est trop sombre.

10. Caméra réseau selon la revendication 8, dans laquelle le capot (3) comprend un film opaque au spectre visible mais transparent au spectre infrarouge.

11. Caméra réseau selon la revendication 8, dans laquelle le capot (3) présente une coloration, réalisée en teinté masse, opaque au spectre visible mais transparente au spectre infrarouge.

12. Caméra réseau selon l'une des revendications précédentes, dans laquelle le capot (3) est motorisé pour se déplacer entre la position ouverte et la position fermée.

13. Caméra réseau selon l'une des revendications précédentes, dans laquelle les données d'information sont représentatives d'un nombre d'individu(s) présent(s) et/ou de l'âge des individus et/ou de leur genre et/ou de l'émotion exprimée et/ou de leur attention et/ou de la position de leur regard et/ou de la position de leur corps et/ou de la direction de leur regard.

14. Procédé de traitement mis en oeuvre dans une caméra réseau (1) selon l'une des revendications 1 à 13, comprenant les étapes de :
- lorsque le capot (3) se trouve dans la position ouverte, acquérir les images acquises par le capteur d'image (5), réaliser sur les images acquises le premier traitement de manière à générer le flux vidéo, et transmettre à un réseau de communication le flux vidéo via la première sortie (16) du module de traitement (10) ;
- lorsque le capot (3) se trouve dans la position fermée, acquérir les images acquises produites par le capteur d'image (5), réaliser sur les images acquises le deuxième traitement de manière à générer des données d'information, et transmettre au réseau de communication les données d'information via la deuxième sortie (17) du module de traitement (10).

15. Programme d'ordinateur comprenant des instructions pour mettre en oeuvre, par un microprocesseur (11) d'une caméra réseau (1), le procédé de traitement selon la revendication 14.

16. Moyens de stockage, **caractérisés en ce qu'**ils stockent un programme d'ordinateur comprenant des instructions pour mettre en oeuvre, par un microprocesseur (11) d'une caméra réseau (1), le procédé de traitement selon la revendication 14.

## Patentansprüche

1. Netzwerkkamera, umfassend:
- einen Bildsensor (5);
- eine Abdeckung (3), die zumindest teilweise für das sichtbare Spektrum undurchlässig ist, wobei die Abdeckung (3) zwischen einer geschlossenen Position, in der sie sich vor dem Bildsensor (5) erstreckt und denselben verdeckt, und einer offenen Position beweglich ist;
- ein Verarbeitungsmodul (10), das mindestens einen Eingang (15), einen ersten Ausgang (16) und einen zweiten Ausgang (17) hat und ausgebildet ist, über den Eingang (15) von dem Bildsensor (5) erfasste Bilder zu empfangen, um an den erfassten Bildern eine erste Verarbeitung durchzuführen, um einen Videostrom zu erzeugen, sowie eine zweite Verarbeitung, um Informationsdaten zu den erfassten Bildern zu erzeugen, und den Videostrom über den ersten Ausgang (16) und die Informationsdaten über den zweiten Ausgang (17) zu übertragen;
- eine Detektionsvorrichtung, die ausgebildet ist, zu erfassen, ob sich die Abdeckung (3) in der offenen Position oder in der geschlossenen Position befindet;
- eine Unterbrechervorrichtung, die mit dem ersten Ausgang (16) des Verarbeitungsmoduls (10) verbunden ist;
wobei die Netzwerkkamera (1) derart ausgebildet ist, dass, wenn die Detektionsvorrichtung erfasst, dass sich die Abdeckung (3) in der geschlossenen Position befindet, die Unterbrechervorrichtung gesteuert wird, um jegliche Übertragung an ein Kommunikationsnetzwerk durch das Verarbeitungsmodul (10) über den ersten Ausgang (16) zu unterbinden.

2. Netzwerkkamera nach Anspruch 1, bei der ein Ausgang (23) der Detektionsvorrichtung direkt mit einem Steuereingang (29) der Unterbrechervorrichtung verbunden ist, wobei die Detektionsvorrichtung so die Unterbrechervorrichtung in Abhängigkeit von der Erfassung der offenen Position oder der geschlossenen Position der Abdeckung (3) steuert.

3. Netzwerkkamera nach Anspruch 2, bei der die Unterbrechervorrichtung einen Videopuffer (28) umfasst.

4. Netzwerkkamera nach einem der vorhergehenden Ansprüche, bei dem die Detektionsvorrichtung eine optische Gabel (20) umfasst, die ausgebildet ist, zwischen ihren Armen (21) das Vorhandensein oder das Nichtvorhandensein der Abdeckung (3) oder eines mit der Abdeckung verbundenen Zwischenstücks (24) zu erfassen.

5. Netzwerkkamera nach einem der vorhergehenden Ansprüche, umfassend einen ersten Übertragungsweg (18) und einen zweiten Übertragungsweg (19), die mit dem ersten Ausgang (16) bzw. mit dem zweiten Ausgang (17) des Verarbeitungsmoduls (10) verbunden sind, wobei der erste Übertragungsweg einen ersten Durchsatz aufweist, der ausreicht, den Videostrom zu übertragen, und der zweite Übertragungsweg einen zweiten Durchsatz aufweist, der nicht ausreicht, den Videostrom zu übertragen.

6. Netzwerkkamera nach Anspruch 5, bei der das Verarbeitungsmodul eine Software integriert, die Routinen umfasst, um ein Kommunikationsprotokoll, das auf dem zweiten Übertragungsweg (19) verwendet wird, umzusetzen.

7. Netzwerkkamera nach einem der vorhergehenden Ansprüche, bei der das Verarbeitungsmodul (10) einen Bildprozessor (12) umfasst, der direkt mit dem Bildsensor (5) verbunden ist, einen Mikroprozessor (11) und einen neuronalen Verarbeitungschip (13), der verwendet wird, um die zweite Verarbeitung durchzuführen.

8. Netzwerkkamera nach einem der vorhergehenden Ansprüche, bei der die Abdeckung für das sichtbare Spektrum undurchlässig, aber für das Infrarotspektrum durchlässig ist.

9. Netzwerkkamera nach Anspruch 8, ferner umfassend mindestens eine Infrarot-Elektrolumineszenzdiode (7), die ausgebildet ist, Infrarotlicht auszusenden, um eine Szene gegenüber der Netzwerkkamera (1) zu beleuchten, wenn sich die Abdeckung (3) in der geschlossenen Position befindet und die Szene zu dunkel ist.

10. Netzwerkkamera nach Anspruch 8, bei der die Abdeckung (3) eine für das sichtbare Spektrum undurchlässige Folie, aber für das Infrarotspektrum durchlässige Folie umfasst.

11. Netzwerkkamera nach Anspruch 8, bei der die Abdeckung (3) eine Färbung aufweist, die in Masse gefärbt wurde, die für das sichtbare Spektrum undurchlässig, aber für das Infrarotspektrum durchlässig ist.

12. Netzwerkkamera nach einem der vorhergehenden Ansprüche, bei der die Abdeckung (3) motorisiert ist, um sich zwischen der offenen Position und der geschlossenen Position zu verschieben.

13. Netzwerkkamera nach einem der vorhergehenden Ansprüche, bei der die Informationsdaten repräsentativ für eine Anzahl von anwesenden Personen und/oder das Alter der Personen und/oder ihr Geschlecht und/oder die ausgedrückte Emotion und/oder ihre Aufmerksamkeit und/oder die Position ihres Blicks und/oder die Position ihres Körpers und/oder die Richtung ihres Blicks sind.

14. Verarbeitungsverfahren, das in einer Netzwerkkamera (1) nach einem der Ansprüche 1 bis 13 eingesetzt wird, umfassend die Schritte:
- wenn sich die Abdeckung (3) in der offenen Position befindet, Erfassen der von dem Bildsensor (5) erfassten Bilder, Durchführen der ersten Verarbeitung an den erfassten Bildern, um den Videostrom zu erzeugen, und Übertragen des Videostroms über den ersten Ausgang (16) des Verarbeitungsmoduls (10) an ein Kommunikationsnetzwerk;
- wenn sich die Abdeckung (3) in der geschlossenen Position befindet, Erfassen der von dem Bildsensor (5) erzeugten Bilder, Durchführen der zweiten Verarbeitung an den erfassten Bildern, um Informationsdaten zu erzeugen, und Übertragen der Informationsdaten über den zweiten Ausgang (17) des Verarbeitungsmoduls (10) an das Kommunikationsnetzwerk.

15. Computerprogramm, umfassend Anweisungen zum Durchführen des Verarbeitungsverfahrens nach Anspruch 14 durch einen Mikroprozessor (11) einer Netzwerkkamera (1).

16. Speichermittel, die **dadurch gekennzeichnet sind, dass** sie ein Computerprogramm speichern, das Anweisungen umfasst, um das Verarbeitungsverfahren nach Anspruch 14 durch einen Mikroprozessor (11) einer Netzwerkkamera (1) durchzuführen.

## Claims

1. Network camera comprising:
- an image sensor (5);
- a cover (3) that is at least partially opaque to the visible spectrum, the cover (3) being movable between a closed position, in which it extends in front and hides the image sensor (5), and an open position;
- a processing module (10) having at least one input (15), a first output (16) and a second output (17), and being designed to receive images acquired by the image sensor (5) via the input (15), to process the images a first time so as to generate a video stream and a second time so as to generate information data relating to the images acquired, and to transmit the video stream via the first output (16) and the information data via the second output (17);
- a detection device that is designed to detect whether the cover (3) is in the open position or in the closed position;
- a switching device that is connected to the first output (16) of the processing module (10);
the network camera (1) being designed such that, when the detection device detects that the cover (3) is in the closed position, the switching device is controlled so as to forbid any transmission to a communication network by the processing module (10) via the first output (16).

2. Network camera according to claim 1, wherein an output (23) of the detection device is directly connected to a control input (29) of the switching device,the detection device thus controlling the switching device depending on whether the open position or closed position of the cover (3) is detected.

3. Network camera according to claim 2, wherein the switching device comprises a video buffer (28).

4. Network camera according to any of the preceding claims, wherein the detection device comprises an optical fork sensor (20) that is designed to detect, between its arms (21), the presence or absence of the cover (3) or of an intermediate piece (24) connected to the cover.

5. Network camera according to any of the preceding claims, comprising a first transmission channel (18) and a second transmission channel (19) that are connected to the first output (16) and to the second output (17), respectively, of the processing module (10), the first transmission channel having a first rate that is sufficient for transmitting the video stream, and the second transmission channel having a second rate that is not sufficient for transmitting the video stream.

6. Network camera according to claim 5, wherein the processing module includes software comprising routines for implementing a communication protocol used on the second transmission channel (19).

7. Network camera according to any of the preceding claims, wherein the processing module (10) comprises an image processor (12) that is directly connected to the image sensor (5), a microprocessor (11) and a neural processing chip (13) that is used to carry out the processing a second time.

8. Network camera according to any of the preceding claims, wherein the cover is opaque to the visible spectrum but transparent to the infrared spectrum.

9. Network camera according to claim 8, further comprising at least one infrared electroluminescent diode (7) that is designed to emit infrared light in order to illuminate a scene in front of the network camera (1) when the cover (3) is in the closed position and when the scene is too dark.

10. Network camera according to claim 8, wherein the cover (3) comprises a film that is opaque to the visible spectrum but transparent to the infrared spectrum.

11. Network camera according to claim 8, wherein the cover (3) has a mass-dyed colouring that is opaque to the visible spectrum but transparent to the infrared spectrum.

12. Network camera according to any of the preceding claims, wherein the cover (3) is motorised in order to move between the open position and the closed position.

13. Network camera according to any of the preceding claims, wherein the information data are representative of a number of individuals present and/or of the age of the individuals and/or of their gender and/or of the emotion expressed and/or of their attention and/or of the position of their gaze and/or of the position of their body and/or of the direction of their gaze.

14. Processing method carried out in a network camera (1) according to any of claims 1 to 13, comprising the steps of:
- when the cover (3) is in the open position, acquiring the images acquired by the image sensor (5), processing the acquired images a first time so as to generate a video stream, and transmitting the video stream to a communication network via the first output (16) of the processing module (10);
- when the cover (3) is in the closed position, acquiring the acquired images produced by the image sensor (5), processing the acquired images a second time so as to generate information data, and transmitting the information data to the communication network via the second output (17) of the processing module (10).

15. Computer programme comprising instructions for carrying out the processing method according to claim 14 by means of a microprocessor (11) of a network camera (1).

16. Storage means, **characterised in that** they store a computer programme comprising instructions for carrying out the method according to claim 14 by means of a microprocessor (11) of a network camera (1).
